# EUROPEAN PATENT APPLICATION

(11) **EP 3 451 273 A1**
(43) Date of publication of application: **06.03.2019**
(21) Application number: 18180708.2
(22) Date of filing: 29.06.2018
(51) Int. Cl.: G06Q 50/06

(54) **METHOD AND SYSTEM FOR MANAGING END TO END DATA FLOW ACROSS A HYDROCARBON ACCOUNTING SYSTEM**

(30) Priority: 31.08.2017 IN 201741030883
(71) Applicant: Wipro Limited, 560 035 Karnataka (IN)
(72) Inventor: SRIVASTAVA, Anurag Kumar, 273001 Uttar Pradesh (IN); SHAH, Dhaval, 396191 Gujarat (IN); TRIVEDI, Prabhat Kumar, 493118 Chhattisgarh (IN)
(74) Representative: Finnegan Europe LLP

(57) **Abstract**

Method and system for managing data flow across a hydrocarbon accounting system are disclosed. The method includes identifying at least one failed tag associated with location nodes in a hydrocarbon data management and processing system. Thereafter, at least one source tag associated with the at least one failed tag is identified. Attribute values of the at least one source tag and a source mapping associated with the at least one failed tag is then retrieved. Attribute values retrieved from at least one successful tag and the at least one source tag are then compared with an associated predefined threshold range. Notification messages are generated for each of the at least one failed tag. Notification messages may also be generated for successful tags and source tags having attribute values outside the associated predefined threshold range. The method includes performing a self-healing technique based on the at least one notification message.

## Description

### Technical Field

This disclosure relates generally to hydrocarbon accounting system and more particularly to method and system for managing end to end data flow across a hydrocarbon accounting system.

### Background

Hydrocarbon accounting is a critical process for production and exploration of oil and gas. In hydrocarbon accounting, production and commercial allocation to respective producing entity and to respective partners of the field are executed for produced and exported hydrocarbon fluids. Availability and accuracy of production data is the key for executing such a process. Here, the data generated from the field instruments are associated with tags and the data are processed and flow through a processing system before a hydrocarbon accounting system consumes it.

Monitoring of such data flow is a tedious process and requires more time to collect, analyze, and debug failures at each level and is prone to errors.

### SUMMARY

According to a first aspect of the present invention, there is provided a computer-implemented method for managing data flow across a hydrocarbon accounting system, the method comprising: identifying at least one failed tag from a plurality of tags associated with a plurality of location nodes in a hydrocarbon data management and processing system, wherein the at least one failed tag fails to provide associated attribute values; identifying at least one source tag associated with the at least one failed tag; retrieving attribute values of the at least one source tag and a source mapping associated with the at least one failed tag, wherein a source mapping for a failed tag comprises mapping of each source tag upstream of the failed tag in the hydrocarbon data management and processing system; comparing attribute values retrieved from at least one successful tag from the plurality of tags and the at least one source tag with an associated predefined threshold range; generating at least one notification message for each of the at least one failed tag, and one or more of the at least one successful tag and one or more of the at least one source tag having attribute values outside the associated predefined threshold range; and performing a self-healing technique based on the at least one notification message.

An embodiment of the invention may further comprise: extracting attribute values of a plurality of tags associated with the plurality of location nodes in the hydrocarbon data management and processing system; and determining the at least one successful tag based on the at least one failed tag and the plurality of tags.

An embodiment of the invention may further comprise identifying one or more failed source tags from the at least one source tag, wherein the at least one source tag fails to provide associated attribute values.

An embodiment of the invention may further comprise determining on-field attribute values of the sensors associated with the one or more failed source tag and associated failed tags.

Advantageously, comparing attribute values may comprise comparing attribute value(s) retrieved from the successful tag(s) with one or more of the at least one source tag upstream of the successful tag(s).

Conveniently, each of the at least one notification message may comprise information related to an affected location node and a corrective action for the affected location node.

An embodiment of the invention may further comprise sharing each of the at least one notification message with an associated stakeholder to implement the corrective action.

An embodiment of the invention may further comprise: detecting abnormalities in at least one attribute of system elements in the hydrocarbon data management and processing system; generating at least one abnormality notification message in response to detecting the abnormalities, wherein the at least one abnormality notification message comprises details related to the abnormalities and associated preventive actions; and implementing preventive actions to avoid failure of the system elements in response to detecting the abnormalities.

An embodiment of the invention may further comprise: identifying failed system elements resulting from failed preventive actions; and applying the self-healing technique to automatically rectify the failed system elements.

An embodiment of the invention may further comprise: identifying failed system elements in the hydrocarbon data management and processing system; and applying the self-healing technique to automatically rectify the failed system elements in in the hydrocarbon data management and processing system.

Advantageously, each of the plurality of tags may be associated with a sensor installed in a node from the plurality of location nodes in the hydrocarbon data management and processing system.

According to a second aspect of the present invention, there is provided a system for managing data flow across a hydrocarbon accounting system, the system comprising: a processor; and a memory communicatively coupled to the processor and having processor instructions stored thereon, causing the processor, on execution to perform any of the methods discussed above with reference to the first aspect of the invention.

According to a third aspect of the present invention, there is provided a computer-readable storage medium storing instructions which, when executed by one or more processors of a computing device, cause the computing device to perform any of the methods discussed above with reference to the first aspect of the invention.

In one embodiment, a method for managing data flow across a hydrocarbon accounting system is disclosed. The method includes identifying, by a computing device, at least one failed tag from a plurality of tags associated with a plurality of location nodes in a hydrocarbon data management and processing system, wherein the at least one failed tag fails to provide associated attribute values. The method further includes identifying, by the computing device, at least one source tag associated with the at least one failed tag. The method further includes retrieving, by the computing device, attribute values of the at least one source tag and a source mapping associated with the at least one failed tag, wherein a source mapping for a failed tag comprises mapping of each source tag upstream of the failed tag in the hydrocarbon data management and processing system. The method includes comparing, by the computing device, attribute values retrieved from at least one successful tag from the plurality of tags and the at least one source tag with an associated predefined threshold range. The method further includes generating, by the computing device, at least one notification message for each of the at least one failed tag, and one or more of the at least one successful tag and one or more of the at least one source tag having attribute values outside the associated predefined threshold range. The method includes performing, by the computing device, a self-healing technique based on the at least one notification message.

In another embodiment, a system for managing data flow across a hydrocarbon accounting system is disclosed. The system includes a processor and a memory communicatively coupled to the processor and having processor instructions stored thereon, causing the processor, on execution to identify at least one failed tag from a plurality of tags associated with a plurality of location nodes in a hydrocarbon data management and processing system, wherein the at least one failed tag fails to provide associated attribute values; identify at least one source tag associated with the at least one failed tag; retrieve attribute values of the at least one source tag and a source mapping associated with the at least one failed tag, wherein a source mapping for a failed tag comprises mapping of each source tag upstream of the failed tag in the hydrocarbon data management and processing system; compare attribute values retrieved from at least one successful tag from the plurality of tags and the at least one source tag with an associated predefined threshold range; generate at least one notification message for each of the at least one failed tag, and one or more of the at least one successful tag and one or more of the at least one source tag having attribute values outside the associated predefined threshold range; and perform a self-healing technique based on the at least one notification message.

In yet another embodiment, a computer-readable storage medium is disclosed, the computer-readable storage medium has instructions stored thereon, causing a computing device that includes one or more processors to perform steps including identifying at least one failed tag from a plurality of tags associated with a plurality of location nodes in a hydrocarbon data management and processing system, wherein the at least one failed tag fails to provide associated attribute values; identifying at least one source tag associated with the at least one failed tag; retrieving attribute values of the at least one source tag and a source mapping associated with the at least one failed tag, wherein a source mapping for a failed tag comprises mapping of each source tag upstream of the failed tag in the hydrocarbon data management and processing system; comparing attribute values retrieved from at least one successful tag from the plurality of tags and the at least one source tag with an associated predefined threshold range; generating at least one notification message for each of the at least one failed tag, and one or more of the at least one successful tag and one or more of the at least one source tag having attribute values outside the associated predefined threshold range; and performing a self-healing technique based on the at least one notification message.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram illustrating a system for managing data flow across a hydrocarbon accounting system, in accordance with an embodiment.
**FIG. 2** is a block diagram illustrating various components within a computing device for managing data flow across a hydrocarbon accounting system, in accordance with an embodiment.
**FIG. 3** illustrates a flowchart of a method for managing data flow across a hydrocarbon accounting system, in accordance with an embodiment.
**FIG. 4** illustrates a flowchart of a method for identifying failed tags and tags that breach an associated predefined threshold range, in accordance with an embodiment.
**FIG. 5** illustrates a flowchart of a method for rectifying failed system elements in a hydrocarbon data management and processing system, in accordance with an embodiment.
**FIG. 6** illustrates a flowchart of a method for rectifying failed system elements in a hydrocarbon data management and processing system, in accordance with another embodiment.
**FIG. 7** illustrates a block diagram of an exemplary computer system for implementing various embodiments.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

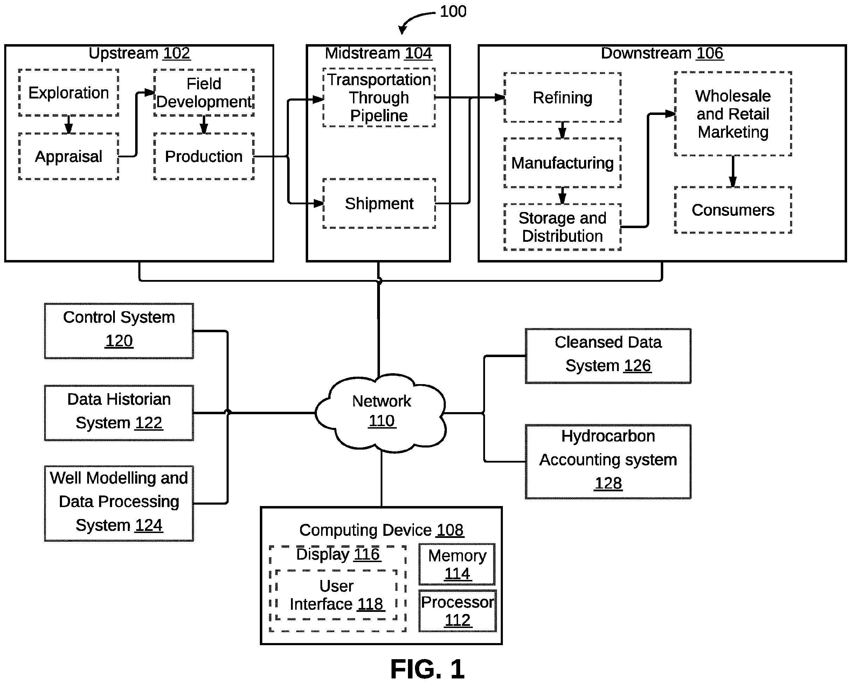

Additional illustrative embodiments are listed below. In one embodiment, FIG. 1 illustrates a system 100 for managing data flow across a hydrocarbon accounting system 128 for a hydrocarbon data management and processing system. The hydrocarbon data management and processing system (not shown in FIG. 1), for example, may be in the oil and gas industry. Various components of the hydrocarbon data management and processing system may be spread across three parts, i.e., an upstream part 102, a midstream part 104, and a downstream part 106. Upstream part 102 may include exploration, appraisal, field development, and production. Midstream part 104 may include transportation through pipeline and shipment. Downstream part 106 includes refining, manufacturing, storage and distribution, wholesale and retail marketing, and consumers. At various physical location nodes within upstream part 102, midstream part 104, and downstream part 106, various field instruments or sensors are installed. Examples of the field instruments and sensors may include, but are not limited to, flow meters, pressure transmitters, level sensors, temperature sensors, and analysis instruments. Each of these field instruments measures one or more attributes of the hydrocarbon production and processing facility. By way of an example, pressure sensors may be installed on well heads in upstream part 102 to measure the pressure for the produced hydrocarbon from wells in real time. By way of another example, flow meters and pressure transmitters may be installed in the pipelines in upstream part 102 and midstream part 104, in order to measure the rate of flow and pressure (attribute values) at various location nodes in the pipelines.

Various attribute values captured by the field instruments and the sensors installed in the hydrocarbon data production and processing facility are communicated to a computing device 108, via a network 110. Network 110 may be a wired or a wireless network and the examples may include, but are not limited to the Internet, Wireless Local Area Network (WLAN), Wi-Fi, Long Term Evolution (LTE), Worldwide Interoperability for Microwave Access (WiMAX), and General Packet Radio Service (GPRS). Computing device 108, for example, may be an application server, a laptop, a desktop, or a tablet. Computing device 108 processes these attribute values to manage data flow across the hydrocarbon accounting system 128. To this end, computing device 108 includes a processor 112 that is communicatively coupled to a memory 114, which may be a non-volatile memory or a volatile memory. Examples of non-volatile memory, may include, but are not limited to a flash memory, a Read Only Memory (ROM), a Programmable ROM (PROM), Erasable PROM (EPROM), and Electrically EPROM (EEPROM) memory. Examples of volatile memory may include, but are not limited Dynamic Random Access Memory (DRAM), and Static Random-Access memory (SRAM).

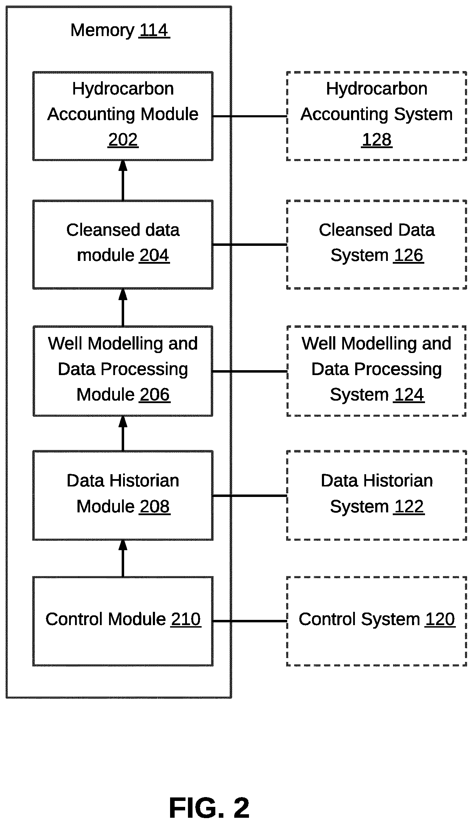

Memory 114 further includes various modules that enable computing device 108 to manage data flow across the hydrocarbon accounting system 128. The modules are explained in detail in conjunction with FIG. 2. Computing device 108 may further include a display 116 having a User Interface (Ul) 118 that may be used by an administrator to provide inputs and to interact with computing device 108. Display 116 may further be used to display result of managing data flow across the hydrocarbon accounting system 128 by computing device 108. Computing device 108 further interacts, via network 110, with each of a control system 120, a data historian system 122, a well modelling and data processing system 124, a cleansed data system 126, and the hydrocarbon accounting system 128.

Control system 120 also interacts, via network 110, with each of upstream part 102, midstream part 104, and downstream part 106. Control system 120 is a gathering and a regulating station for field instruments and sensors based on predefined logics to run the operations seamlessly and without any disruption. Control system 120 may include a process control system or a Supervisory Control And Data Acquisition (SCADA) system (not shown in FIG. 2), that is coupled to field instruments or sensors in order to receive data therefrom. Control system 120 is the first layer where data from field instruments and sensors is collected and are monitored in real-time on screen of control stations by operators. The data so collected is then stored into data historian system 122.

Data Historian system 122 records and retrieves production and process data by time. It additionally stores the information in a time series database that can efficiently store data with minimal disk space and fast retrieval. The data is then utilized by other modules to plot trends, perform modelling, calculate production, and derive results that are required by a business entity.

Well modeling and data processing system 124 derives theoretical production volume by combined calculation of well model and critical well parameters, which is then used to calculate production rates. Well model may be derived from well test results and well simulation. Data points so derived are fed into well modeling and data processing system 124 through different connected system for processing into cleansed data system 126 and hydrocarbon accounting system 128.

Cleansed data system 126 is the primary source of production data for hydrocarbon accounting system 128. Cleansed data system 126 includes processed data, for example, total volume of production, average of various parameters, or calculated data made up of multiple data points. The raw data to perform all these calculations is retrieved from well modelling and data processing system 124 and data historian system 122. The tags of these data configured in hydrocarbon accounting system 128 are used to retrieve data from cleansed data system 126 on a scheduled time through a scheduled job. Thus, it is critical for cleansed data system 126 to be up and running to make data available for consumption by hydrocarbon accounting system 128.

Hydrocarbon accounting system 128 further includes a production data validation and management system, an allocation calculation engine, and a reporting interface (not shown in FIG. 1). Hydrocarbon accounting system 128 performs daily and monthly allocation for production of hydrocarbons and back allocates them to an associated producing entity, for example, a well in case of oil and gas industry. Hydrocarbon accounting system 128 also entitles each stakeholder with their share of production for revenue accounting.

Referring now to FIG. 2, a block diagram of various components within memory 114 of computing device 108 for managing data flow across the hydrocarbon accounting system 128 is illustrated, in accordance with an embodiment. Memory 114 further includes a hydrocarbon accounting module 202, a cleansed data module 204, a well modelling and data processing module 206, a data historian module 208, and a control module 210. It will be apparent to a person skilled in the art that the above discussed modules may be located in different memories of different computing devices. In this case, the modules may be communicatively linked together by one or more of bus, network, or other connection mechanisms.

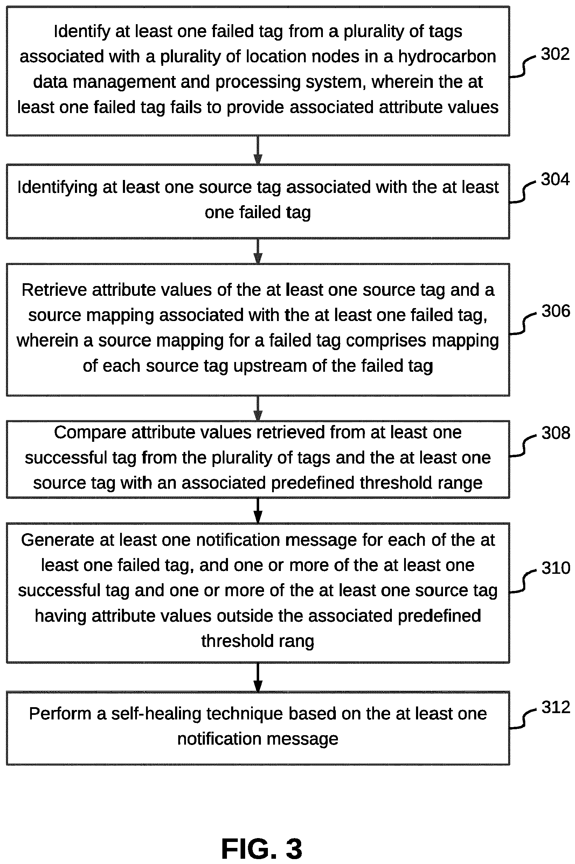

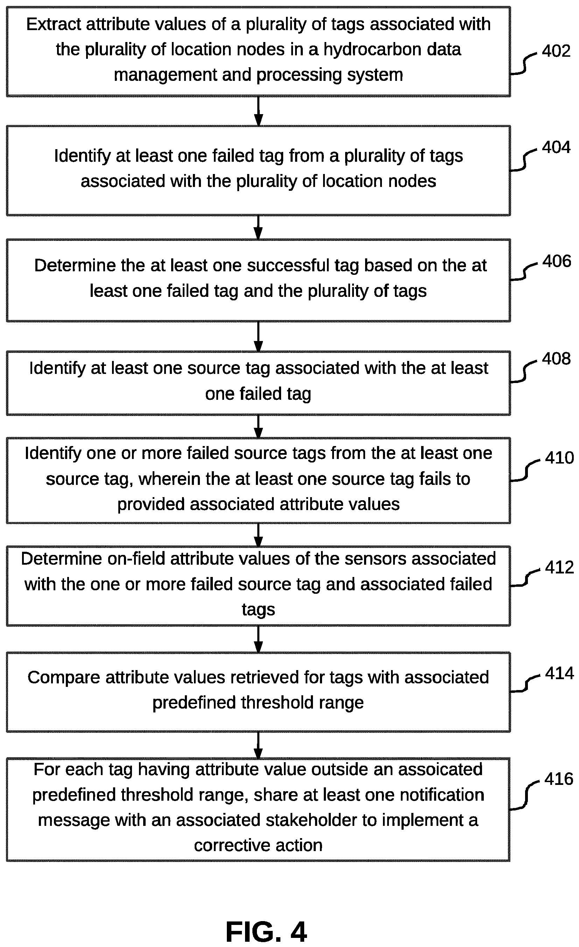

As depicted in FIG. 2, each of the above modules interact with corresponding systems to retrieve or transfer relevant data. In other words, control module 210 interacts with control system 120, data historian module 208 interacts with data historian system 122, well modelling and data processing module 206 interacts with well modelling and data processing system 124, a cleansed data module 204 interacts with cleansed data system 126, and hydrocarbon accounting module 202 interacts with hydrocarbon accounting system 128. In an alternate embodiment, a single module may interact with each of control system 120, data historian system 122, well modelling and data processing system 124, cleansed data system 126, and hydrocarbon accounting system 128. Functionalities performed by each module in memory 114 are further explained in detail in conjunction with FIG. 3 and 4.

Referring now to FIG. 3, a flowchart of a method for managing data flow across a hydrocarbon accounting system 128 is illustrated, in accordance with an embodiment. Computing device 108 first extracts, via control module 210 and control system 120, attribute values from various field instruments and sensors installed at a plurality of location nodes in the hydrocarbon production and processing facility. Thereafter, computing device 108 maps these attribute values to a plurality of tags. In other words, each tag is associated with a field instrument or sensor and an attribute value retrieved from that field instrument or sensor. This mapping may be saved in a database associated with hydrocarbon accounting system 128, via hydrocarbon accounting module 202. By way of an example, attribute values for rate of flow and pressure may be extracted from flow meters and pressure transmitters in the pipelines. In such case, a tag may be mapped to rate of flow (which is the attribute value) at a given location node and the flow meter installed at that location node. Similarly, a tag may be mapped to a pressure (which is an attribute value) at a given location node and the pressure transmitter installed at that location node. Once the mapping is done, attribute values mapped to a plurality of tags associated with the plurality of location nodes is extracted.

At step 302, computing device 108 identifies one or more failed tag from the plurality of tags. The one or more failed tags are so termed, as they fail to provide associated attribute values. By way of an example, a tag may have been mapped to an attribute value of pressure measured by a pressure transmitter at a given location node in the hydrocarbon data management and processing system. If computing device 108 fails to retrieve this attribute value of pressure, the tag is identified as a failed tag. In an embodiment, once computing device 108 retrieves attribute values associated with the plurality of tags, computing device 108 write them into a relational DB (for example, but not limited to SQL DB) in a defined structure.

Thereafter, at step 304, computing device 108 identifies one or more source tags associated with the one or more failed tags. In an embodiment, computing device 108 pings the one or more failed tags retrieved from the database associated with hydrocarbon accounting module 202 into a database associated with cleansed data system 126, via cleansed data module 204, in order to retrieve attribute values associated with the one or more failed tags and to identify the one or more source tags associated with the one or more failed tags.

At step 306, computing device 108 retrieves attribute values of the one or more source tags and a source mapping associated with the one or more failed tags. A source mapping for a failed tag includes mapping of each source tag upstream of the failed tag in the hydrocarbon data management and processing system. In an embodiment, computing device 108 pings the one or more failed tags and their associated status, which are still not updating in the relational DB, to well modelling and data processing system 124, via well modelling and data processing module 206 in order to retrieve attribute value of the one or more source tags and their status along with the source mapping details of tags required for well modelling, if they are associated with the one or more failed tags.

Data historian module 208 includes final raw attribute values in the hydrocarbon data management and processing system, retrieved from data historian system 122. In other words, data historian module 208 includes on-field attribute values of field instruments or sensors associated with the one or more failed source tag and associated failed tags. Thus, in an embodiment, computing device 108 pings all failed and non-updating source tags out of well modelling and data processing system 124 into data historian system 122 to check associated attribute values. As a result, it is inferred whether the field instruments or sensors have been generating data points required for monitoring and allocation at hydrocarbon accounting system 128.

At step 308, computing device 108 compares attribute values retrieved from one or more successful tags from the plurality of tags and the one or more source tags with an associated predefined threshold range. The one or more successful tags are identified based on the total number of the plurality of tags and the number of failed tags. In other words, the one or more successful tags are identified by subtracting the number of failed tags from the total number of plurality of tags. Each attribute value is expected to be within the associated predefined threshold range. By way of an example, pressure within a pipeline at a given location node should not be less than a minimum pressure and should not be more than a maximum pressure. In other words, predefined business rules are created for each attribute value. This enables computing device 108 to keep a check on attribute values.

Thereafter, at step 310, computing device 108 generates one or more notification messages for each of the one or more failed tags. Additionally, at step 310, computing device 108 generates notification messages for at least one of the one or more successful tags and at least one of the one or more source tags that have attribute values outside the associated predefined threshold range. In other words, data points for the attribute values, which breach the business rules and calculation configuration, are notified. Each of the one or more notification messages include information related to an affected location node and a corrective action for the affected location node. By way of an example, a notification message would include information regarding the field instrument or sensor that is identified as breaching an associated predefined threshold range. The notification message would also include a corrective action for that field instrument or sensor. By way of another example, the notification message would include information regarding a failure node within the data flow channel between various modules in memory 114. In an embodiment, computing device 108 may compare attribute value retrieved from a successful tag with one or more source tags upstream of the successful tag. In other words, attribute values of a tag in hydrocarbon accounting module 202 is sequentially compared with attribute value of the tag in upstream modules, i.e., cleansed data module 204, well modelling and data processing module 206, data historian module 208, and control module 210, in order to keep a check. As a result, computing device 108 is able to track attribute values for a tag that flows from one module to another in computing device 108.

Based on the one or more notification messages, computing device 108, at step 312, performs a self-healing technique to implement a corrective action. After retrieving attribute values and status of the one or more failed tags from different data flow systems, an end-to-end view of the data status would be obtained. As a result, a failure node from the data flow channel is easily identified. Additionally, the respective stakeholders or owners of the failure node would get a system-triggered notification to take necessary action. Thus, the turnaround time for making the data available for accounting and reporting would be reduced significantly.

It will be apparent to a person skilled in the art that the method is not limited to hydrocarbon accounting system 128 and is applicable in all domains or systems where data is mapped to a specific tag and flows through a set of system processing the tag and creating a network of tags.

Referring now to FIG. 4, a flowchart of a method for identifying failed tags and tags that breach an associated predefined threshold range is illustrated, in accordance with an embodiment. At step 402, attribute values of a plurality of tags associated with a plurality of location nodes in the hydrocarbon data management and processing system are extracted. At step 404, one or more failed tags are identified from a plurality of tags associated with the plurality of location nodes. At step 406, one or more successful tags are determined based on the one or more failed tags and the plurality of tags. In other words, the one or more successful tags are identified by subtracting the number of failed tags from the total number of plurality of tags. At step 408, one or more source tags associated with the one or more failed tags are identified. This has been explained in detail in conjunction with FIG. 3.

Thereafter, at step 410, one or more failed source tags from the one or more source tags are identified. The one or more source tags fails to provide associated attribute values. Then, at step 412, on-field attribute values of sensors or field instruments associated with the one or more failed source tags and associated failed tags is determined. The on-field attribute values may be determined by a person working on field. At step 414, attribute values retrieved for tags are compared with associated predefined threshold range. For each tag that has an attribute value outside an associated predefined threshold range, at step 416, one or more notification messages are shared with an associated stakeholder to implement a corrective action. This has been explained in detail in conjunction with FIG. 3.

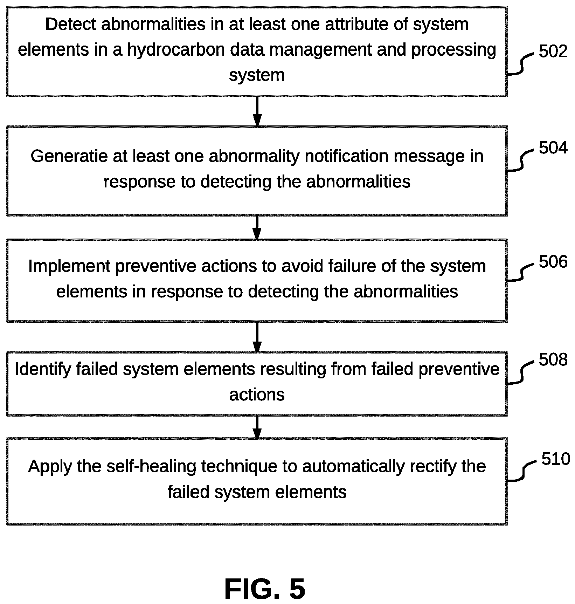

Referring now to FIG. 5, a flowchart of a method for rectifying failed system elements in a hydrocarbon data management and processing system is illustrated, in accordance with an embodiment. At step 502, abnormalities in one or more attributes of system elements in the hydrocarbon data management and processing system are detected. System elements may include a scheduler associated with hydrocarbon accounting module 202, which is used to fetch data from cleansed data system 126, via cleansed data module 204. When the scheduler fails, the data would not be fetched into hydrocarbon accounting module 202, thereby impacting the management of data flow across the hydrocarbon accounting system 128. When any such abnormality, i.e., scheduler failure, is detected in hydrocarbon accounting module 202, these results are captured in a separate table of the relational DB along with remarks of failure.

In a similar manner, specific jobs are scheduled in cleansed data module 204 and well modelling and data processing module 206, in order to carry out various processing of attribute values associated with tag. If any of these specific jobs fail, it could disrupt the data flow between the modules in memory 114. Similar to hydrocarbon accounting module 202, statuses of these jobs are monitored by fetching their status from respective databases (for example, database associated with cleansed data module 204, in case of a scheduled job within cleansed data module 204 fails). This status is then written back into the relational DB.

System elements may also include various communication links or interfaces that connect various system elements or modules in the hydrocarbon data management and processing system. These interfaces may be monitored by pinging each server in the communication link and capturing its status in the relational DB. If any ping fails, the communication link or interface is interpreted to have failed. Additionally, various attributes for a communication link may include performance, capacity utilization, and uptime of the communication link.

Attributes associated with other system elements may also include CPU utilization and disk space utilization. Additionally, compatibility of the various system elements or module and users would may also be assessed, whenever any system element undergoes an upgrade or is modified.

In response to detecting the abnormalities, one or more abnormality notification messages are generated at step 504. The one or more abnormality notification messages include details related to the abnormalities and associated preventive actions. Thereafter, at step 506, preventive action is implemented to avoid failure of the system elements in response to detecting the abnormalities. By way of an example, when the scheduler in hydrocarbon accounting system 128 is about to fail, an abnormality notification message that includes details of the probable failure and prevention actions, is mailed to a stakeholder associated with hydrocarbon accounting system 128, via hydrocarbon accounting module 202. The stakeholder may implement the preventive action to prevent the failure. Stakeholder are similarly notified when scheduled jobs may fail in cleansed data system 126 and well modelling and data processing system 124, via respective modules in memory 114. By way of another example, any abrupt change in utilization of CPU or space or communication link would be captured, and abnormality notifications may be sent to the respective stakeholders indicating a preventive action that may be taken in order to avoid any disruption.

One or more of the suggested preventive actions may fail. Thus, at step 508, failed system elements resulting from failed preventive actions are identified. At step 510, self-healing technique to automatically rectify the failed system elements are applied. By way of an example, when the scheduler associated with hydrocarbon accounting module 202 fails, it may be self-started as part of self-healing technique.

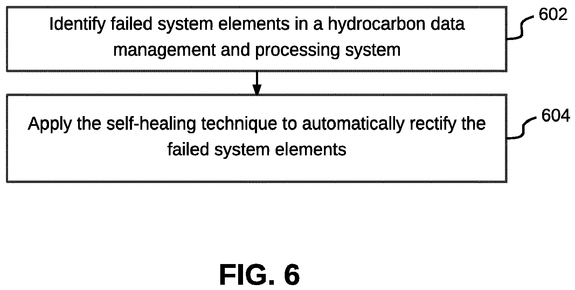

Referring now to FIG. 6, a flowchart of a method for rectifying failed system elements in a hydrocarbon data management and processing system is illustrated, in accordance with another embodiment. At step 602, failed system elements are identified in the hydrocarbon data management and processing system. Thereafter, at step 604, self-healing techniques to automatically rectify the failed system elements are applied. This has been explained in detail in conjunction with FIG. 5. In this embodiment, preventive actions are not implemented, but the self-healing techniques are directly applied.

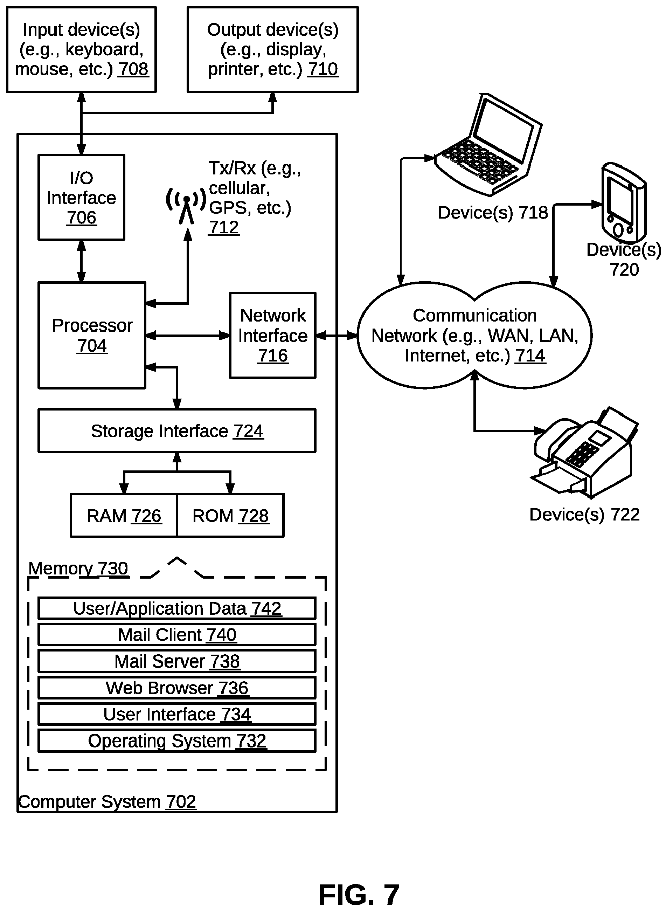

Referring now to FIG. 7, a block diagram of an exemplary computer system for implementing various embodiments is illustrated. Computer system 702 may include a central processing unit ("CPU" or "processor") 704 that includes at least one data processor for executing program components for executing user-generated requests or system-generated requests. A user may include a person, a person using a device such as such as those included in this disclosure, or such a device itself. Processor 704 may include specialized processing units such as integrated system (bus) controllers, memory management control units, floating point units, graphics processing units, digital signal processing units, etc. Processor 704 may include a microprocessor, such as AMD® ATHLON® microprocessor, DURON® microprocessor OR OPTERON® microprocessor, ARM's application, embedded or secure processors, IBM® POWERPC®, INTEL'S CORE® processor, ITANIUM® processor, XEON® processor, CELERON® processor or other line of processors, etc. Processor 704 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 704 may be disposed in communication with one or more input/output (I/O) devices via an I/O interface 706. I/O interface 706 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using I/O interface 706, computer system 702 may communicate with one or more I/O devices. For example, an input device 708 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. An output device 710 may be a printer, fax machine, video display (e.g., cathode ray tube (CRT), liquid crystal display (LCD), light-emitting diode (LED), plasma, or the like), audio speaker, etc. In some embodiments, a transceiver 712 may be disposed in connection with processor 704. Transceiver 712 may facilitate various types of wireless transmission or reception. For example, transceiver 712 may include an antenna operatively connected to a transceiver chip (e.g., TEXAS® INSTRUMENTS WILINK WL1283® transceiver, BROADCOM® BCM4550IUB8® transceiver, INFINEON TECHNOLOGIES® X-GOLD 618-PMB9800® transceiver, or the like), providing IEEE 802.11a/b/g/n, Bluetooth, FM, global positioning system (GPS), 2G/3G HSDPA/HSUPA communications, etc.

In some embodiments, processor 704 may be disposed in communication with a communication network 714 via a network interface 716. Network interface 716 may communicate with communication network 714. Network interface 716 may employ connection protocols including, without limitation, direct connect, Ethernet (e.g., twisted pair 50/500/5000 Base T), transmission control protocol/internet protocol (TCP/IP), token ring, IEEE 802.11a/b/g/n/x, etc. Communication network 714 may include, without limitation, a direct interconnection, local area network (LAN), wide area network (WAN), wireless network (e.g., using Wireless Application Protocol), the Internet, etc. Using network interface 716 and communication network 714, computer system 702 may communicate with devices 718, 720, and 722. The devices may include, without limitation, personal computer(s), server(s), fax machines, printers, scanners, various mobile devices such as cellular telephones, smartphones (e.g., APPLE® IPHONE® smartphone, BLACKBERRY® smartphone, ANDROID® based phones, etc.), tablet computers, eBook readers (AMAZON® KINDLE® ereader, NOOK® tablet computer, etc.), laptop computers, notebooks, gaming consoles (MICROSOFT® XBOX® gaming console, NINTENDO® DS® gaming console, SONY® PLAYSTATION® gaming console, etc.), or the like. In some embodiments, computer system 702 may itself embody one or more of the devices.

In some embodiments, processor 704 may be disposed in communication with one or more memory devices (e.g., RAM 726, ROM 728, etc.) via a storage interface 724. Storage interface 724 may connect to memory 730 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

Memory 730 may store a collection of program or database components, including, without limitation, an operating system 732, user interface application 734, web browser 736, mail server 738, mail client 740, user/application data 742 (e.g., any data variables or data records discussed in this disclosure), etc. Operating system 732 may facilitate resource management and operation of computer system 702. Examples of operating systems 732 include, without limitation, APPLE® MACINTOSH® OS X platform, UNIX platform, Unix-like system distributions (e.g., Berkeley Software Distribution (BSD), FreeBSD, NetBSD, OpenBSD, etc.), LINUX distributions (e.g., RED HAT®, UBUNTU®, KUBUNTU®, etc.), IBM® OS/2 platform, MICROSOFT® WINDOWS® platform (XP, Vista/7/8, etc.), APPLE® IOS® platform, GOOGLE® ANDROID® platform, BLACKBERRY® OS platform, or the like. User interface 734 may facilitate display, execution, interaction, manipulation, or operation of program components through textual or graphical facilities. For example, user interfaces may provide computer interaction interface elements on a display system operatively connected to computer system 702, such as cursors, icons, check boxes, menus, scrollers, windows, widgets, etc. Graphical user interfaces (GUIs) may be employed, including, without limitation, APPLE® Macintosh® operating systems' AQUA® platform, IBM® OS/2® platform, MICROSOFT® WINDOWS® platform (e.g., AERO® platform, METRO® platform, etc.), UNIX X-WINDOWS, web interface libraries (e.g., ACTIVEX® platform, JAVA® programming language, JAVASCRIPT® programming language, AJAX® programming language, HTML, ADOBE® FLASH® platform, etc.), or the like.

In some embodiments, computer system 702 may implement a web browser 736 stored program component. Web browser 736 may be a hypertext viewing application, such as MICROSOFT® INTERNET EXPLORER® web browser, GOOGLE® CHROME® web browser, MOZILLA® FIREFOX® web browser, APPLE® SAFARI® web browser, etc. Secure web browsing may be provided using HTTPS (secure hypertext transport protocol), secure sockets layer (SSL), Transport Layer Security (TLS), etc. Web browsers may utilize facilities such as AJAX, DHTML, ADOBE® FLASH® platform, JAVASCRIPT® programming language, JAVA® programming language, application programming interfaces (APis), etc. In some embodiments, computer system 702 may implement a mail server 738 stored program component. Mail server 738 may be an Internet mail server such as MICROSOFT® EXCHANGE® mail server, or the like. Mail server 738 may utilize facilities such as ASP, ActiveX, ANSI C++/C#, MICROSOFT .NET® programming language, CGI scripts, JAVA® programming language, JAVASCRIPT® programming language, PERL® programming language, PHP® programming language, PYTHON® programming language, WebObjects, etc. Mail server 738 may utilize communication protocols such as internet message access protocol (IMAP), messaging application programming interface (MAPI), Microsoft Exchange, post office protocol (POP), simple mail transfer protocol (SMTP), or the like. In some embodiments, computer system 702 may implement a mail client 740 stored program component. Mail client 740 may be a mail viewing application, such as APPLE MAIL® mail client, MICROSOFT ENTOURAGE® mail client, MICROSOFT OUTLOOK® mail client, MOZILLA THUNDERBIRD® mail client, etc.

In some embodiments, computer system 702 may store user/application data 742, such as the data, variables, records, etc. as described in this disclosure. Such databases may be implemented as fault-tolerant, relational, scalable, secure databases such as ORACLE® database OR SYBASE® database. Alternatively, such databases may be implemented using standardized data structures, such as an array, hash, linked list, struct, structured text file (e.g., XML), table, or as object-oriented databases (e.g., using OBJECTSTORE® object database, POET® object database, ZOPE® object database, etc.). Such databases may be consolidated or distributed, sometimes among the various computer systems discussed above in this disclosure. It is to be understood that the structure and operation of the any computer or database component may be combined, consolidated, or distributed in any working combination.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Various embodiments of the invention provide method and system for managing end to end data flow across a hydrocarbon accounting system. A process driven data tracing mechanism is provided, which also incorporates automated self-healing for failed communication links and other system elements. The provided solution significantly reduced turnaround time for making data available for accounting and reporting. Moreover, this solution is applicable in all the domains or system where data is mapped to a specific tag and flows through a set of system processing the tag and creating a network of tags.

The specification has described method and system for managing end to end data flow across a hydrocarbon accounting system. The illustrated steps are set out to explain the exemplary embodiments shown, and it should be anticipated that ongoing technological development will change the manner in which particular functions are performed. Examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A computer-implemented method for managing data flow across a hydrocarbon accounting system, the method comprising:
identifying at least one failed tag from a plurality of tags associated with a plurality of location nodes in a hydrocarbon data management and processing system, wherein the at least one failed tag fails to provide associated attribute values;
identifying at least one source tag associated with the at least one failed tag;
retrieving attribute values of the at least one source tag and a source mapping associated with the at least one failed tag, wherein a source mapping for a failed tag comprises mapping of each source tag upstream of the failed tag in the hydrocarbon data management and processing system;
comparing attribute values retrieved from at least one successful tag from the plurality of tags and the at least one source tag with an associated predefined threshold range;
generating at least one notification message for each of the at least one failed tag, and one or more of the at least one successful tag and one or more of the at least one source tag having attribute values outside the associated predefined threshold range; and
performing a self-healing technique based on the at least one notification message.

2. The method of claim 1, further comprising:
extracting attribute values of a plurality of tags associated with the plurality of location nodes in the hydrocarbon data management and processing system; and
determining the at least one successful tag based on the at least one failed tag and the plurality of tags.

3. The method of claim 1 or claim 2, further comprising identifying one or more failed source tags from the at least one source tag, wherein the at least one source tag fails to provide associated attribute values.

4. The method of claim 3, further comprising determining on-field attribute values of the sensors associated with the one or more failed source tag and associated failed tags.

5. The method of any of claims 1 to 4, wherein comparing further comprises comparing an attribute value retrieved from the successful tag(s) with one or more of the at least one source tag upstream of the successful tag(s).

6. The method of any of claims 1 to 5, wherein each of the at least one notification message comprises information related to an affected location node and a corrective action for the affected location node.

7. The method of claim 6, further comprising sharing each of the at least one notification message with an associated stakeholder to implement the corrective action.

8. The method of any of claims 1 to 7, further comprising:
detecting abnormalities in at least one attribute of system elements in the hydrocarbon data management and processing system;
generating at least one abnormality notification message in response to detecting the abnormalities, wherein the at least one abnormality notification message comprises details related to the abnormalities and associated preventive actions; and
implementing preventive actions to avoid failure of the system elements in response to detecting the abnormalities.

9. The method of claim 8, further comprising:
identifying failed system elements resulting from failed preventive actions; and
applying the self-healing technique to automatically rectify the failed system elements.

10. The method of any of claims 1 to 9, further comprising:
identifying failed system elements in the hydrocarbon data management and processing system; and
applying the self-healing technique to automatically rectify the failed system elements in in the hydrocarbon data management and processing system.

11. The method of any of claims 1 to 10, wherein each of the plurality of tags is associated with a sensor installed in a node from the plurality of location nodes in the hydrocarbon data management and processing system.

12. A system for managing data flow across a hydrocarbon accounting system, the system comprising:
a processor; and
a memory communicatively coupled to the processor and having processor instructions stored thereon, causing the processor, on execution to perform the method of any of claims 1 to 11.

13. A computer-readable storage medium storing instructions which, when executed by one or more processors of a computing device, cause the computing device to perform the method of any of claims 1 to 11.
